# EUROPEAN PATENT APPLICATION

(11) **EP 4 517 857 A1**
(43) Date of publication of application: **05.03.2025**
(21) Application number: 24194675.5
(22) Date of filing: 14.08.2024
(51) Int. Cl.: H01M 4/131, H01M 4/36, H01M 4/525, H01M 4/58, H01M 4/62, H01M 10/0525

(54) **CATHODE ACTIVE MATERIAL FOR LITHIUM SECONDARY BATTERY AND LITHIUM SECONDARY BATTERY INCLUDING THE SAME**

(30) Priority: 31.08.2023 KR 20230115282
(71) Applicant: SK On Co., Ltd., Seoul 03161 (KR)
(72) Inventor: SON, Chang Geun, 34124 Daejeon (KR); NAM, Yae Seol, 34124 Daejeon (KR); SEO, Jung Min, 34124 Daejeon (KR); HAN, Ji Soo, 34124 Daejeon (KR)
(74) Representative: Prüfer & Partner mbB Patentanwälte · Rechtsanwälte

(57) **Abstract**

A cathode active material for a lithium secondary battery includes first lithium metal phosphate particles and second lithium metal phosphate particles. The first lithium metal phosphate particles have a single particle shape. The second lithium metal phosphate particles include iron and manganese, and have a secondary particle shape in which primary particles are aggregated.

## Description

### TECHINICAL FIELD

The disclosure of this patent application relates to a cathode active material for a lithium secondary battery and a lithium secondary battery including the same.

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery include a lithium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

A lithium metal phosphate may be used as a cathode active material for the lithium secondary battery.

As an application range of the lithium secondary batteries is being expanded, higher capacity, longer life-span and higher energy density are required. For example, power properties, low-temperature performance and electrode density of the lithium secondary battery may be degraded due to a low ionic conductivity and an energy density of the lithium metal phosphate.

### SUMMARY

According to an aspect of the present disclosure, there is provided a cathode active material for a lithium secondary battery having improved power properties and low-temperature performance.

According to an aspect of the present disclosure, there is provided a lithium secondary battery having improved power properties and low-temperature performance.

A cathode active material for a lithium secondary battery includes first lithium metal phosphate particles having a single particle shape, and second lithium metal phosphate particles including iron and manganese, and having a secondary particle shape in which primary particles are aggregated.

In some embodiments, a ratio of a weight of the first lithium metal phosphate particle relative to a total weight of the cathode active material for a lithium secondary battery may be in a range from 0.01 to 0.5.

In some embodiments, an average particle diameter (D50) of the first lithium metal phosphate particles may be smaller than an average particle diameter (D50) of the second lithium metal phosphate particles.

In some embodiments, an average particle diameter (D50) of the first lithium metal phosphate particles may be in a range from 1 µm to 10 µm.

In some embodiments, an average particle diameter (D50) of the primary particles forming the second lithium metal phosphate particles may be in a range from 10 nm to 100 nm, and an average particle diameter (D50) of the second lithium metal phosphate particles may be in a range from 1 µm to 10 µm.

In some embodiments, the first lithium metal phosphate particles may be represented by Chemical Formula 1.

[Chemical Formula 1] LiₐMₓP_{y}O_{4+z}

In Chemical Formula 1, 0.9≤a≤1.2, 0.99≤x≤1.01, 0.9≤y≤1.2, -0.1≤z≤0.1, and M includes at least one element selected from Fe, Co and Ni.

In some embodiments, the second lithium metal phosphate particles may be represented by Chemical Formula 2.

[Chemical Formula 2] Li_{b}Mn_{c}Fe_{d}PₑO_{4+f}

In Chemical Formula 2, 0.9<b<1.2, 0.4≤c≤0.8, 0.2≤d≤0.6, 0.9≤e≤1.2, and - 0.1≤f≤0.1.

In some embodiments, the first lithium metal phosphate particles or the second lithium metal phosphate particles further includes a doping element or a coating element. The doping element or the coating element may include at least one element selected from Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

In some embodiments, the first lithium metal phosphate particles or the second lithium metal phosphate particles may include a carbon coating formed on a surface portion thereof.

In some embodiments, a content of the carbon coating based on a total weight of the first lithium metal phosphate particles may be in a range from 0.5 wt% to 3.0wt, or a content of the carbon coating based on the total weight of the second lithium metal phosphate particles may be in a range from 0.5 wt% to 3.0 wt%.

In some embodiments, the cathode active material further includes third lithium metal phosphate particles including iron and manganese and having a single particle shape.

In some embodiments, a ratio of a weight of the third lithium metal phosphate particles relative to a total weight of the second lithium metal phosphate particles and the third lithium metal phosphate particles may be in a range from 0.01 to 0.5.

A lithium secondary battery includes a cathode including the above-described cathode active material for a lithium secondary battery, and an anode facing the cathode.

According to an aspect of the present disclosure, life-span properties of a lithium secondary battery may be improved.

According to an aspect of the present disclosure, an energy density of a lithium secondary battery may be improved.

According to an aspect of the present disclosure, power properties of a lithium secondary battery may be improved.

According to an aspect of the present disclosure, mechanical stability of a cathode active material may be improved.

According to an aspect of the present disclosure, a high electrical conductivity of primary particles and a high pressing density of secondary particles may be achieved.

The cathode active material and the lithium secondary battery of the present disclosure may be widely applied in green technology fields such as an electric vehicle, a battery charging station, a solar power generation, a wind power generation, etc., using a battery, etc. The cathode active material and the lithium secondary battery according to the present disclosure may be used for eco-friendly electric vehicles and hybrid vehicles to prevent a climate change by suppressing air pollution and greenhouse gas emissions. etc.

### BRIEF DESCRIPTION OF THE DRAWINGS

FIG. 1 is a schematic cross-sectional view illustrating a cathode active material layer in accordance with example embodiments.
FIG. 2 is a schematic cross-sectional view illustrating a cathode active material layer in accordance with example embodiments.
FIG. 3 and FIG. 4 are a schematic plan view and a cross-sectional view, respectively, illustrating a lithium secondary battery in accordance with example embodiments.

### DETAILED DESCRIPTION OF THE EMBODIMENTS

Embodiments of the present disclosure provide a cathode active material for a lithium secondary battery (hereinafter, that may be abbreviated as `a cathode active material') including a lithium metal phosphate particle. Additionally, a lithium secondary battery (hereinafter, that may be abbreviated as `a secondary battery') including the cathode active material for a lithium secondary battery is provided.

Hereinafter, embodiments of the present disclosure will be described in detail. However, these embodiments are merely illustrative and the present inventive concepts are not limited to a specific exemplary embodiment.

A cathode active material for a lithium secondary battery (hereinafter, may be abbreviated as "a cathode active material") includes a lithium-transition metal oxide particle.

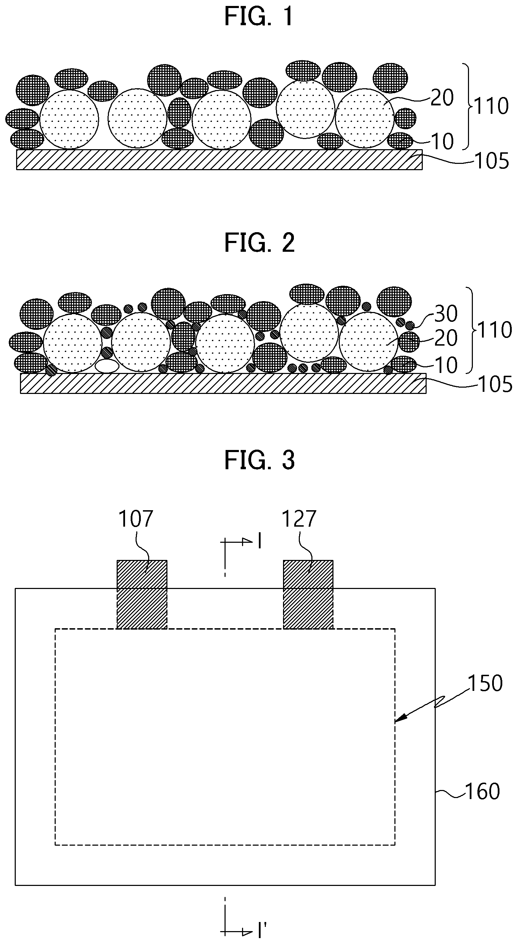

FIG. 1 is a schematic cross-sectional view illustrating a cathode active material layer in accordance with example embodiments.

Referring to FIG. 1, a cathode active material layer 110 including a cathode active material may be formed on at least one surface of the cathode current collector 105.

The cathode current collector 105 may include stainless steel, nickel, aluminum, titanium, copper, or an alloy thereof. The cathode current collector 105 may include aluminum or stainless steel surface-treated with carbon, nickel, titanium, copper or silver. For example, a thickness of the cathode current collector 105 may be in a range from 10 µm to 50 µm.

The cathode active material includes a first lithium metal phosphate particle 10 having a single particle shape and a second lithium metal phosphate particle 20 having a secondary particle shape formed by aggregation of the primary particles. The second lithium metal phosphate particle 20 includes iron and manganese.

For example, the "primary particle" may exist in a presence of the secondary particle formed by aggregation of the primary particles. For example, the primary particles may be provided as an element of the secondary particle.

The term "single particle shape" herein may be used to exclude the secondary particle formed by aggregation of a plurality of the primary particles. For example, in the first lithium metal phosphate particle 10, a secondary particle structure in which primary particles (e.g., more than 10, 20, 30, 40 or more, 50 or more particles) are assembled or aggregated may be excluded.

The term "single particle shape" used herein does not exclude a form in which, e.g., 2 to 10 single particles are simply adjacent to or in contact with each other.

In some embodiments, the first lithium metal phosphate particle 10 may have a structure in which a plurality of single particles are integrally merged to be substantially converted into one single particle rather than an aggregate of a plurality of particles.

For example, the first lithium metal phosphate particle 10 may have a granular or spherical single particle shape.

A life-span and an electrode density of a lithium secondary battery may be improved and power properties may also be improved by using both the first lithium metal phosphate particle 10 and the second lithium metal phosphate particle 20 together.

For example, life-span properties and mechanical stability of the cathode active material may be improved by using the first lithium metal phosphate particle 10 having the single particle shape.

For example, the second lithium metal phosphate particles 20 may have the secondary particle shape in which the primary particles are aggregated, so that high electrical conductivity of the primary particles and high electrode density of the secondary particles may be implemented together. Further, an electrolyte solution may be impregnated through a space between the primary particles, thereby increasing the power properties.

In some embodiments, a ratio of a weight of the first lithium metal phosphate particle 10 based on a total weight of the cathode active material may be in a range from 0.01 to 0.5, e.g., from 0.15 to 0.5, or from 0.3 to 0.45. In the above range, the life-span properties and mechanical stability may be improved while sufficiently improving the electrode density.

In some embodiments, an average particle diameter (D50) of the first lithium metal phosphate particles 10 may be smaller than an average particle diameter (D50) of the second lithium metal phosphate particles 20. Accordingly, the first lithium metal phosphate particles 10 may be present in empty spaces between the second lithium metal phosphate particles 20 having the secondary particle shape, thereby increasing a solid content of a slurry and improving the electrode density and the power properties.

The term "average particle diameter", "D50", or "average particle diameter (D50)" used herein may refer to a particle diameter when a cumulative volume percentage corresponds to 50% in a particle size distribution based on a particle volume.

In some embodiments, an average particle diameter (D50) of the first lithium metal phosphate particles 10 may be in a range from 1 µm to 10 µm, e.g., from 1 µm to 5 µm, or from 3 µm to 5 µm. In the above range, an operational voltage and an energy density of the lithium secondary battery may be increased and power properties may be improved.

In some embodiments, an average particle diameter (D50) of the primary particles forming the second lithium metal phosphate particles 20 may be in a range from 10 nm to 100 nm, e.g., from 30 nm to 70 nm. In the above range, the average particle diameter (D50) of the second lithium metal phosphate particles 20 having the secondary particle shape may be adjusted to an appropriate range.

In some embodiments, an average particle diameter (D50) of the second lithium metal phosphate particles 20 may be in a range from 1 µm to 10 µm, e.g., from 4 µm to 9 µm, or from 5 µm to 7 µm. In the above range, the electrode density and the power properties may be improved.

In some embodiments, the first lithium metal phosphate particles 10 have an olivine structure and may include a crystal structure represented by Chemical Formula 1.

[Chemical Formula 1] LiₐMₓP_{y}O_{4+z}

In Chemical Formula 1, 0.9≤a≤1.2, 0.99≤x≤1.01, 0.9≤y≤1.2, -0.1≤z≤0.1, and M may include at least one selected from Fe, Co and Ni.

In some embodiments, the second lithium metal phosphate particles 20 have an olivine structure and may include a crystal structure represented by Chemical Formula 2.

[Chemical Formula 2] Li_{b}Mn_{c}Fe_{d}PₑO_{4+f}

In Chemical Formula 2, 0.9<b<1.2, 0.4≤c≤0.8, 0.2≤d≤0.6, 0.9≤e≤1.2, and - 0.1≤f≤0.1.

The chemical structures represented by Chemical Formulae 1 and 2 represent a bonding relation included in crystal structures of the first lithium metal phosphate particle 10 and the second lithium metal phosphate particle 20, respectively, and are not intended to exclude another additional element. For example, in Chemical Formula 1, M includes Fe, Co, and/or Ni, and Fe, Co, and/or Ni may be provided as a main active element of the cathode active material. Chemical Formulae 1 and 2 are provided to express a bonding relation of the main active element, and to be understood as encompassing introduction and substitution of the additional element.

In an embodiment, at least one of the first lithium metal phosphate particle 10 and the second lithium metal phosphate particle 20 may further include an auxiliary element in addition to the main active element to enhance chemical stability of the cathode active material or the crystal structure. The auxiliary element may be mixed together in the crystal structure to form a bond, and it is to be understood that this case is also included within the range of the chemical structure represented by Chemical Formula 1 or Formula 2.

The auxiliary element may include at least one selected from, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr. The auxiliary element may act as an auxiliary active element such as Al contributing to capacity/power activity of the cathode active material together with Fe, Co, Ni or Mn.

In some embodiments, at least one of the first lithium metal phosphate particle 10 and the second lithium metal phosphate particle 20 may further include a coating element or a doping element. For example, element substantially the same as or similar to the above-described auxiliary element may be used as the coating element or the doping element. For example, one of the above-mentioned elements or a combination of two or more therefrom may be used as the coating element or the doping element.

The coating element or the doping element may be present on a surface of at least one of the first lithium metal phosphate particle 10 and the second lithium metal phosphate particle, or may penetrate through at least one surface of the first lithium metal phosphate particle and the second lithium metal phosphate particle to be included in the bonding structure represented by Chemical Formula 1 or 2.

In an embodiment, the first lithium metal phosphate particle 10 may include LiFePO₄.

For example, the first lithium metal phosphate particle 10 and the second lithium metal phosphate particle 20 may have improved structural stability and economic feasibility compared to other types of cathode active material particles.

In some embodiments, at least one of the first lithium metal phosphate particles 10 and the second lithium metal phosphate particles 20 may include a carbon coating formed on a surface portion thereof. Accordingly, the electrical conductivity of the cathode active material may be improved, thereby improving the power properties.

For example, a content of the carbon coating may be in a range from 0.5 weight percent (wt%) to 3.0 wt% based on a total weight of the particle including the carbon coating.

For example, the content of the carbon coating may be in a range from 0.5 wt% to 3.0 wt% based on a total weight of the first lithium metal phosphate particle 10. For example, the content of the carbon coating may be in a range from 0.5 wt% to 3.0 wt% based on the total weight of the second lithium metal phosphate particle 20. In the above range, deterioration of low-temperature properties of the cathode active material may be suppressed while sufficiently improving the power properties.

FIG. 2 is a schematic cross-sectional view illustrating a cathode active material layer in accordance with example embodiments.

Referring to FIG. 2, the cathode active material may further include a third lithium metal phosphate particle 30 including iron and manganese and having a single particle shape.

For example, the third lithium metal phosphate particle 30 may have substantially the same composition and size as the primary particles forming the second lithium metal phosphate particle 20.

The third lithium metal phosphate particles 30 may be represented by Chemical Formula 2, and may have an average particle diameter (D50) in a range from 10 nm to 100 nm.

For example, the third lithium metal phosphate particle 30 may be included in the cathode active material as additional particles distinguished from and separated from the first lithium metal phosphate particle 10 and the second lithium metal phosphate particle 20.

The third lithium metal phosphate particles 30 having the average particle diameter (D50) smaller than those of the first and second lithium metal phosphate particles 10 and 20 may be used, so that a solid content of a slurry may be increased, and the electrode density and low-temperature power properties may be further improved.

In some embodiments, a ratio of a weight of the third lithium metal phosphate particles 30 based on a total weight of the second lithium metal phosphate particles 20 and the third lithium metal phosphate particles 30 may be in a range from 0.01 to 0.5, e.g., from 0.2 to 0.4. In the above range, the electrode density may be sufficiently improved and the low-temperature output properties may be improved.

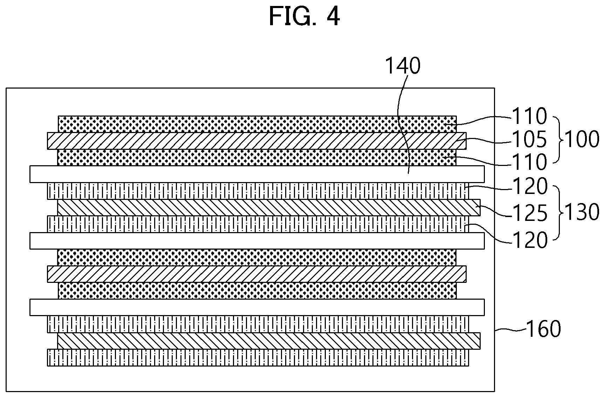

FIG. 3 and FIG. 4 are a schematic plan view and a cross-sectional view, respectively, illustrating a lithium secondary battery in accordance with example embodiments. For example, FIG. 4 is a cross-sectional view taken along a line I-I' of FIG. 3 in a thickness direction.

The structure illustrated in FIG. 3 and FIG. 4 is merely an example for convenience of descriptions, and the structure of the lithium secondary battery according to embodiments of the present disclosure is not limited thereto.

Referring to FIGS. 3 and 4, the lithium secondary battery may include a cathode 100 including the above-described cathode active material and an anode 130 facing the cathode 100.

The cathode 100 may include a cathode active material layer 110 formed by coating the cathode active material on at least one surface of a cathode current collector 105.

The cathode active material may include a plurality of the first and second lithium metal phosphate particles 10 and 20. For example, a total amount of the lithium metal phosphate particles 10, 20 and 30 based on a total weight of the cathode active material may be 50 wt% or more. In some embodiments, the total amount of the lithium metal phosphate particles 10, 20 and 30 based on the total weight of the cathode active material may be 60 wt% or more, 70 wt% or more, 80 wt% or more, or 90 wt% or more.

In an embodiment, the cathode active material may substantially consist of the lithium metal phosphate particles 10, 20 and 30.

For example, a cathode slurry may be prepared by mixing and stirring the cathode active material with a binder, a conductive material and/or a dispersant in a solvent. The cathode slurry may be coated on at least one surface of the cathode current collector 105, and then dried and pressed to prepare the cathode 100.

The cathode current collector 105 may include stainless steel, nickel, aluminum, titanium, copper or an alloy thereof. The cathode current collector 105 may include aluminum or stainless steel surface-treated with carbon, nickel, titanium, copper, silver, etc.

The binder may include, e.g., an organic binder such as vinylidenefluoride-hexafluoropropylene copolymer (PVDF-co-HFP), polyvinylidenefluoride (PVDF), polyacrylonitrile, polymethylmethacrylate, etc., or an aqueous binder such as styrene-butadiene rubber (SBR) that may be used together with a thickener such as carboxymethyl cellulose (CMC).

For example, a PVDF-based binder may be used as the cathode binder. In this case, an amount of the binder for forming the cathode active material layer 110 may be reduced and an amount of the cathode active material may be relatively increased, and thus a power and a capacity of the secondary battery may be enhanced.

The conductive material may be included to promote an electron transfer between active material particles. For example, the conductive material may include a carbon-based conductive material such as graphite, carbon black, graphene, a carbon nanotube, etc., and/or a metal-based conductive material such as tin, tin oxide, titanium oxide, a perovskite material including LaSrCoO₃, LaSrMnO₃, etc.

The anode 130 may include an anode current collector 125 and an anode active material layer 120 formed by coating an anode active material at least one surface of the anode current collector 125.

The anode active material may include a material capable of intercalating and de-intercalating lithium ions. For example, a carbon-based material such as a crystalline carbon, an amorphous carbon, a carbon composite, a carbon fiber, etc.; lithium alloy; a silicon-containing material, or tin, etc.

Examples of the amorphous carbon include hard carbon, coke, a mesocarbon microbead (MCMB) fired at 1500°C or less, a mesophase pitch-based carbon fiber (MPCF), etc. Examples of the crystalline carbon include a graphite-based carbon such as artificial graphite, natural graphite, a graphitized coke, a graphitized MCMB, a graphitized MPCF, etc.

Examples of an element included in the lithium alloy may include aluminum, zinc, bismuth, cadmium, antimony, silicon, lead, tin, gallium, indium, etc.

For example, the anode current collector 125 may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector 125 may be in a range from 10 µm to 50 µm.

In some embodiments, a slurry may be prepared by mixing and stirring the anode active material with a binder, a conductive material, and/or a dispersant in a solvent. The slurry may be coated on the anode current collector, and then dried and pressed to prepare the anode 130.

Materials substantially the same as or similar to the above-described materials may be used as the binder and the conductive material for forming the anode. In some embodiments, the binder for forming the anode may include, e.g., an aqueous binder such as styrene-butadiene rubber (SBR) for a compatibility with the carbon-based active material that may be used together with a thickener such as carboxymethyl cellulose (CMC).

In some embodiments, a separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, etc. The separator 140 may include a nonwoven fabric formed of a glass fiber having a high melting point, a polyethylene terephthalate fiber, etc.

In example embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking, z-folding, stack-folding, etc., of the separator 140.

The electrode assembly may be accommodated together with an electrolyte solution in a case 160 to define the lithium secondary battery. In example embodiments, a non-aqueous electrolyte solution may be used as the electrolyte solution.

The non-aqueous electrolyte solution may include a lithium salt serving as an electrolyte and an organic solvent. The lithium salt may be represented by, e.g., Li⁺X⁻, and examples of an anion X⁻ may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

For example, the organic solvent may include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted cyclic carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separator 140.

The solid electrolyte may include a sulfide-based electrolyte. Non-limiting examples of the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, and Z is Ge, Zn or Ga), Li₂S-GeS₂, Li₂S-SiS₂-Li₃PO₄, Li₂S-SiS₂-LiₚMO_{q}, (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in a combination thereof.

In an embodiment, the solid electrolyte may include, e.g., an oxide-based amorphous solid electrolyte such as Li₂O-B₂O₃-P₂O₅, Li₂O-SiO₂, Li₂O-B₂O₃, Li₂O-B₂O₃-ZnO, etc.

As illustrated in FIG. 4, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Hereinafter, embodiments of the present disclosure are described in more detail with reference to experimental examples.

### Preparation Example 1: First lithium metal phosphate particles (LFP single particle)

Lithium carbonate as a lithium source, iron phosphate and sodium hexamethaphosphate as a dispersant were added to distilled water, and particles were mixed and pulverized through a ball mill to form a mixed solution including LiFePO₄.

The mixed solution containing the LiFePO₄ was dried by using a spray dryer equipped with a micro-nozzle.

The dried powder was fired at a temperature from about 600°C to 750°C for about 5 hours to 12 hours under a nitrogen atmosphere, and then a de-ironing process was performed to obtain LiFePO₄ particles.

The LiFePO₄ particles were pulverized and classified by using a ball mill to prepare first lithium metal phosphate (LFP) particles having an average particle diameter (D50) as shown in Table 1.

### Preparation Example 2: Second lithium metal phosphate particle (LMFP secondary particle) and third lithium metal phosphate particle (LMFP primary particle)

MnO, H₃PO₄, Fe₃O₄ and Li₂CO₃ were mixed using a ball mill. A first firing was performed at 450°C for 4 hours under a mixture argon (Ar) atmosphere, and a second firing was performed at 600°C for 6 hours to obtain LiMn_{0.6}Fe_{0.4}PO₄ particles in the form of a single particle.

The LiMn_{0.6}Fe_{0.4}PO₄ single particles were pulverized and classified using a ball mill to obtain third lithium metal phosphate particles (LMFP primary particles) having an average particle diameter (D50) as shown in Table 1.

The classified LiMn_{0.6}Fe_{0.4}PO₄ single particles were fired at a temperature in a range from 650°C to 700°C for 6 hours in an argon (Ar) atmosphere to obtain LiMn_{0.6}Fe_{0.4}PO₄ particles with a secondary particle shape in which the primary particles were aggregated.

The LiMn_{0.6}Fe_{0.4}PO₄ secondary particles were pulverized and classified using a ball mill to prepare second lithium metal phosphate particles (LMFP secondary particles) having an average particle diameter (D50) as shown in Table 1.

### Examples 1 to 17

The first lithium metal phosphate particles and the second lithium metal phosphate particles having the average particle diameters D50 as shown in Table 1 were prepared according to Preparation Examples 1 and 2, and then mixed to have a weight ratio as shown in Table 1 and used as a cathode active material.

A cathode slurry was prepared by mixing the cathode active material, Denka Black as a conductive material and PVDF as a binder in a mass ratio of 93:5:2. A cathode active material layer formed was formed by coating, drying and pressing the cathode slurry on an aluminum current collector. A solid content of the cathode slurry and a ratio of a mass to a volume (electrode density) of the cathode active material layer after the pressing are shown in Table 4.

A lithium metal was used as an anode active material.

The cathode and the anode prepared as described above were notched in a circular shape having diameters of Φ 14 and Φ 16, respectively, and an electrode cell was formed by interposing a separator (polyethylene, thickness 13 µm) notched with a diameter of Φ 19 between the cathode and the anode. The electrode cell was placed in a coin cell exterior material having a diameter of 20 mm and a height of 1.6 mm, an electrolyte solution was injected and assembled, and an aging process was performed for 12 hours or more so that the electrolyte solution impregnate the electrodes.

A 1M LiPF₆ solution prepared using a mixed solvent of EC/EMC (30/70; volume ratio) was used as the electrolyte solution.

Formation charge and discharge were performed for the secondary battery manufactured as described above (charge condition: CC-CV 0.1C 3.8V 0.05C CUT-OFF, discharge condition: CC 0.1C 2.5V CUT-OFF).

### Examples 18 to 22

A cathode active material and a lithium secondary battery were manufactured by the same method as that in Example 3, except that citric acid was further added as a raw material so that a carbon coating content based on a total weight of the first lithium metal phosphate particles became as shown in Table 1.

### Example 23

A cathode active material and a lithium secondary battery were manufactured by the same method as that in Example 3, except that citric acid was further added as a raw material so that the carbon coating content based on a total weight of the second lithium metal phosphate particles became as shown in Table 1.

### Examples 24 to 28

Third lithium metal phosphate particles having an average particle diameter (D50) of 50 nm were manufactured according to Preparation Example 2.

The prepared third lithium metal phosphate particles were mixed with first lithium metal phosphate particles and second lithium metal phosphate particles in a weight ratio as shown in Table 2 to be used as a cathode active material.

The first lithium metal phosphate particles and the second lithium metal phosphate particles were the same particles as the first lithium metal phosphate particles of Example 3 and the second lithium metal phosphate particles of Example 3, respectively.

A lithium secondary battery was manufactured by the same method as that in Example 3, except that the cathode active material was used.

### Comparative Example 1

A lithium secondary battery was manufactured by the same method as that in Example 3, except that the first lithium metal phosphate particles of Example 3 were only used as a cathode active material.

### Comparative Example 2

A lithium secondary battery was manufactured by the same method as that in Example 3, except that the second lithium metal phosphate particles of Example 3 were only used as cathode active materials.

### Comparative Example 3

First lithium metal phosphate particles and third lithium metal phosphate particles having an average particle diameter D50 as shown in Table 1 were prepared according to Preparation Examples 1 and 2, and then mixed to have a weight ratio as shown in Table 3 and used as a cathode active material.

A lithium secondary battery was manufactured by the same method as that in Example 3, except that the cathode active material was used.

### Comparative Example 4

LiFePO₄ particles in the form of the single particle prepared according to Preparation Example 1 were fired at a temperature of 650°C to 700°C for 6 hours under an argon (Ar) atmosphere to prepare LiFePO₄ particles in the form of the secondary particle in which primary particles were aggregated. The prepared LiFePO₄ particles were classified to prepare first lithium metal phosphate particles (LFP secondary particles) having an average particle diameter (D50) of 10 µm.

A lithium secondary battery was manufactured by the same method as that in Example 3, except that the LFP secondary particles were mixed with the second lithium metal phosphate particles of Example 3 in a weight ratio as shown in Table 3 to be used as a cathode active material.

### Experimental Example 1

### (1) Measurement of average particle diameter (D50)

The average particle diameters (D50) of the first to third lithium metal phosphate particles used in the above-described Examples and Comparative Examples were measured through a laser particle size analyzer (S3500 bluewave, microtrac Co., Ltd.).
measurement conditions: Circulation speed 65 mL/sec
measurement time: 10 to 30 seconds

### (2) Measurement of carbon coating content

Carbon contents of the cathode active materials prepared according to the above-described Examples and Comparative Examples were measured by a C/S analyzer (carbon/sulfuranalyzer, CS844, LECO).

Specifically, the carbon content in the sample was quantitatively analyzed by detecting CO₂ generated when 1 g of the cathode active material sample was combusted.

The measured carbon content was divided by an input weight of the particles (first lithium metal phosphate particles or second lithium metal phosphate particles) including the carbon coating and expressed as a percentage.

Tables 1 to 3 below show the mixed components, the weight ratio, the average particle diameter (D50) and the carbon coating content of the cathode active material. The "weight ratio of LMFP (single particle)" of Table 2 represents a ratio of a weight of LMFP (single particle) to a total weight of LMFP (secondary particle) and LMFP (single particle).

**[Table 1]**

| | component | weight ratio (LFP:LMFP) | average particle diameter (D50) | | | carbon coating content (wt%) |
|---|---|---|---|---|---|---|
| | | | LFP (single particle) (µm) | LMFP (primary particle) (nm) | LMFP (secondary particle) (µm) | |
| Example 1 | LFP (single particle) + LMFP (secondary particle) | 1:99 | 3 | 50 | 5 | - |
| Example 2 | LFP (single particle) + LMFP (secondary particle) | 15:85 | 3 | 50 | 5 | - |
| Example 3 | LFP (single particle) + LMFP (secondary particle) | 30:70 | 3 | 50 | 5 | - |
| Example 4 | LFP (single particle) + LMFP (secondary particle) | 45:55 | 3 | 50 | 5 | - |
| Example 5 | LFP (single particle) + LMFP (secondary particle) | 50:50 | 3 | 50 | 5 | - |
| Example 6 | LFP (single particle) + LMFP (secondary particle) | 0.8:99.2 | 3 | 50 | 5 | - |
| Example 7 | LFP (single particle) + LMFP (secondary particle) | 52:48 | 3 | 50 | 5 | - |
| Example 8 | LFP (single particle) + LMFP (secondary particle) | 30:70 | 0.8 | 50 | 5 | - |
| Example 9 | LFP (single particle) + LMFP (secondary particle) | 30:70 | 1 | 50 | 5 | - |
| Example 10 | LFP (single particle) + LMFP (secondary particle) | 30:70 | 5 | 50 | 5 | - |
| Example 11 | LFP (single particle) + LMFP (secondary particle) | 30:70 | 9 | 50 | 5 | - |
| Example 12 | LFP (single particle) + LMFP (secondary particle) | 30:70 | 11 | 50 | 5 | - |
| Example 13 | LFP (single particle) + LMFP (secondary particle) | 30:70 | 3 | 8 | 0.9 | - |
| Example 14 | LFP (single particle) + LMFP (secondary particle) | 30:70 | 3 | 30 | 4 | - |
| Example 15 | LFP (single particle) + LMFP (secondary particle) | 30:70 | 3 | 70 | 7 | - |
| Example 16 | LFP (single particle) + LMFP (secondary particle) | 30:70 | 3 | 100 | 9 | - |
| Example 17 | LFP (single particle) + LMFP (secondary particle) | 30:70 | 3 | 112 | 11 | - |
| Example 18 | LFP (single particle) + LMFP (secondary particle) | 30:70 | 3 | 50 | 5 | 2.5 |
| Example 19 | LFP (single particle) + LMFP (secondary particle) | 30:70 | 3 | 50 | 5 | 2.5 |
| Example 20 | LFP (single particle) + LMFP (secondary particle) | 30:70 | 3 | 50 | 5 | 0.4 |
| Example 21 | LFP (single particle) + LMFP (secondary particle) | 30:70 | 3 | 50 | 5 | 1.5 |
| Example 22 | LFP (single particle) + LMFP (secondary particle) | 30:70 | 3 | 50 | 5 | 3.0 |
| Example 23 | LFP (single particle) + LMFP (secondary particle) | 30:70 | 3 | 50 | 5 | 3.2 |

**[Table 2]**

| | component | weight ratio (LFP:LMFP (secondary particle):LMFP (single particle)) | weight ratio of LMFP (single particle) |
|---|---|---|---|
| Example 24 | LFP (single particle) + LMFP (secondary particle) + LMFP (single particle) | 30:65:5 | 0.07 |
| Example 25 | LFP (single particle) + LMFP (secondary particle) + LMFP (single particle) | 30:50:20 | 0.29 |
| Example 26 | LFP (single particle) + LMFP (secondary particle) + LMFP (single particle) | 30:40:30 | 0.43 |
| Example 27 | LFP (single particle) + LMFP (secondary particle) + LMFP (single particle) | 30:35:35 | 0.5 |
| Example 28 | LFP (single particle) + LMFP (secondary particle) + LMFP (single particle) | 30:33:37 | 0.53 |

**[Table 3]**

| | component | weight ratio (LFP:LMFP) |
|---|---|---|
| Comparative Example 1 | LFP (single particle) | 100:0 |
| Comparative Example 2 | LMFP (secondary particle) | 0:100 |
| Comparative Example 3 | LFP (single particle) + LMFP (single particle) | 30:70 |
| Comparative Example 4 | LFP (secondary particle) + LMFP (secondary particle) | 30:70 |

### Experimental Example 2

### (1) Evaluation on capacity retention (100 cycles)

Each lithium secondary battery manufactured according to the above-described Examples and Comparative Examples was charged (CC-CV 0.1C 0.01V 0.01C CUT-OFF) and discharged (CC 0.1C 1.5V CUT-OFF) at room temperature (25°C) to measure a discharge capacity at the 100th cycle and a discharge capacity at the 1st cycle. A 10-minute interphase was present between the cycles.

A capacity retention was calculated as a percentage by dividing the 100th discharge capacity by the 1st discharge capacity.

### (2) Measurement of ratio of 2C discharge capacity to 0.1C discharge capacity

A discharge capacity was measured by performing charging (CC-CV 0.5C 3.65V 0.05C CUT-OFF) and discharging (CC 0.1C 2.5V CUT-OFF) at room temperature (25°C) of each lithium secondary battery manufactured according to the above-described Examples and Comparative Examples. The measured discharge capacity was evaluated as a 0.1C discharge capacity.

Charging (CC-CV 0.5C 3.65V 0.05C CUT-OFF) and discharging (CC 2C 2.5V CUT-OFF) of each lithium secondary battery manufactured according to the above-described Examples and Comparative Examples were performed at room temperature (25°C) to measure a discharge capacity. The measured discharge capacity was evaluated as a 2C discharge capacity.

A ratio of the 2C discharge capacity relative to the 0.1C discharge capacity was calculated as a percentage.

### (3) Evaluation on low-temperature power property

Charging (CC-CV 0.5C 3.65V 0.05C CUT-OFF) and discharging (CC 0.1C 2.5V CUT-OFF) of each lithium secondary battery manufactured according to the above-described Examples and Comparative Examples were performed at room temperature (25°C) to measure a discharge capacity. The measured discharge capacity was evaluated as a room temperature discharge capacity.

Charging (CC-CV 0.5C 3.65V 0.05C CUT-OFF) and discharging (CC 0.1C 2.5V CUT-OFF) of each lithium secondary battery manufactured according to the above-described Examples and Comparative Examples were performed at a low temperature (-7°C) to measure a discharge capacity. The measured discharge capacity was evaluated as a low-temperature discharge capacity.

A low-temperature power property (%) was calculated as a percentage of the low-temperature discharge capacity relative to the room-temperature discharge capacity.

The evaluation results are shown in Tables 4 and 5 below.

**[Table 4]**

| | solid content in slurry (wt%) | cathode density (g/cm³) | capacity retention (%, 100cyc) | ratio of 2C discharge capacity to 0.1C discharge capacity (%) | low temperature (-7 °C) power property (%) |
|---|---|---|---|---|---|
| Example 1 | 52 | 2.48 | 89.7 | 91.7 | 63.8 |
| Example 2 | 53 | 2.48 | 90.8 | 91.0 | 63.5 |
| Example 3 | 55 | 2.50 | 92.9 | 90.5 | 63.1 |
| Example 4 | 56 | 2.51 | 93.0 | 90.1 | 62.8 |
| Example 5 | 56 | 2.51 | 93.2 | 89.8 | 62.0 |
| Example 6 | 49 | 2.45 | 88.5 | 92.0 | 63.8 |
| Example 7 | 56 | 2.50 | 93.5 | 87.7 | 61.0 |
| Example 8 | 52 | 2.48 | 92.5 | 88.2 | 60.8 |
| Example 9 | 53 | 2.49 | 92.6 | 88.9 | 61.5 |
| Example 10 | 55 | 2.49 | 92.4 | 89.3 | 61.8 |
| Example 11 | 56 | 2.52 | 92.8 | 90.0 | 62.2 |
| Example 12 | 49 | 2.44 | 89.6 | 90.7 | 63.2 |
| Example 13 | 52 | 2.47 | 90.1 | 87.9 | 60.7 |
| Example 14 | 53 | 2.47 | 91.1 | 88.5 | 61.0 |
| Example 15 | 55 | 2.50 | 91.5 | 89.3 | 61.7 |
| Example 16 | 55 | 2.49 | 92.4 | 90.0 | 62.1 |
| Example 17 | 49 | 2.44 | 92.4 | 90.6 | 62.3 |

**[Table 5]**

| | solid content in slurry (wt%) | cathode density (g/cm³) | capacity retention (%, 100cyc) | ratio of 2C discharge capacity to 0.1C discharge capacity (%) | low temperature (-7 °C) power property (%) |
|---|---|---|---|---|---|
| Example 18 | 55 | 2.48 | 92.5 | 92.3 | 64.1 |
| Example 19 | 54 | 2.46 | 92.7 | 92.5 | 64.2 |
| Example 20 | 55 | 2.46 | 92.6 | 90.9 | 63.3 |
| Example 21 | 55 | 2.47 | 92.1 | 91.8 | 63.8 |
| Example 22 | 53 | 2.45 | 92.3 | 92.2 | 64.2 |
| Example 23 | 54 | 2.43 | 92.3 | 92.4 | 64.3 |
| Example 24 | 55 | 2.50 | 93.1 | 92.5 | 64.2 |
| Example 25 | 58 | 2.52 | 93.3 | 92.3 | 64.0 |
| Example 26 | 58 | 2.53 | 93.4 | 92.1 | 63.9 |
| Example 27 | 59 | 2.53 | 93.5 | 91.5 | 63.7 |
| Example 28 | 59 | 2.52 | 93.6 | 90.2 | 63.3 |
| Comparative Example 1 | 46 | 2.38 | 92.8 | 68.3 | 57.2 |
| Comparative Example 2 | 45 | 2.36 | 82.0 | 70.2 | 57.8 |
| Comparative Example 3 | 47 | 2.40 | 86.3 | 75.5 | 58.1 |
| Comparative Example 4 | 42 | 2.33 | 80.7 | 77.1 | 58.2 |

Referring to Tables 4 and 5, the electrode density, the capacity retention, the discharge capacity per rate and the low temperature power property were generally improved in Examples where the first lithium metal phosphate particles having the single particle shape and the second lithium metal phosphate particles including iron and manganese and having the secondary particle shape formed by the aggregation of the primary particles compared to those from Comparative Examples.

In Example 6 where the ratio of the weight of the first lithium metal phosphate particles based on the total weight of the cathode active material was less than 0.01, the solid content in the slurry and the capacity retention were relatively lowered compared to those from other Examples.

In Example 7 where the ratio of the weight of the first lithium metal phosphate particles based on the total weight of the cathode active material exceeded 0.5, the power property was relatively degraded compared to those from other Examples.

In Example 8 where the average particle diameter (D50) of the first lithium metal phosphate particles was less than 1 µm, the low temperature power property was relatively degraded compared to those from other Examples.

In Example 12 where the average particle diameter (D50) of the first lithium metal phosphate particles was greater than 10 µm, the solid content in the slurry and the cathode density were relatively lowered compared to those from other Examples.

In Example 13 where the average particle diameter (D50) of the primary particles forming the second lithium metal phosphate particles was less than 10 nm and the average particle diameter of the second lithium metal phosphate particles was less than 1 µm, the low temperature power property was relatively degraded compared to those from other Examples.

In Example 17 where the average particle diameter (D50) of the primary particles forming the second lithium metal phosphate particles was greater than 100 nm and the average particle diameter of the second lithium metal phosphate particles was greater than 10 µm, the solid content in the slurry and the cathode density were relatively lowered compared to those from other Examples.

In Examples 28 where the ratio of the weight of the third lithium metal phosphate particles based on the total weight of the second lithium metal phosphate particles and the third lithium metal phosphate particles was greater than 0.5, the ratio of the 2C discharge capacity to the 0.1C discharge capacity was relatively lowered, compared to those from Examples 24 to 27 where the weight ratio was in a range from 0.01 to 0.5.

## Claims

1. A cathode active material for a lithium secondary battery, comprising:
first lithium metal phosphate particles having a single particle shape; and
second lithium metal phosphate particles including iron and manganese, and having a secondary particle shape in which primary particles are aggregated.

2. The cathode active material for a lithium secondary battery according to claim 1, wherein a ratio of a weight of the first lithium metal phosphate particle relative to a total weight of the cathode active material for a lithium secondary battery is in a range from 0.01 to 0.5.

3. The cathode active material for a lithium secondary battery according to claim 1 or claim 2, wherein an average particle diameter (D50) of the first lithium metal phosphate particles is smaller than an average particle diameter (D50) of the second lithium metal phosphate particles.

4. The cathode active material for a lithium secondary battery according to any one of claims 1 to 3, wherein an average particle diameter (D50) of the first lithium metal phosphate particles is in a range from 1 µm to 10 µm.

5. The cathode active material for a lithium secondary battery according to any one of claims 1 to 4, wherein an average particle diameter (D50) of the primary particles forming the second lithium metal phosphate particles is in a range from 10 nm to 100 nm, and an average particle diameter (D50) of the second lithium metal phosphate particles is in a range from 1 µm to 10 µm.

6. The cathode active material for a lithium secondary battery according to any one of claims 1 to 5, wherein the first lithium metal phosphate particles are represented by Chemical Formula 1:
[Chemical Formula 1] LiₐMₓP_{y}O_{4+z}
wherein, in Chemical Formula 1, 0.9≤a≤1.2, 0.99≤x≤1.01, 0.9≤y≤1.2, - 0.1≤z≤0.1, and M includes at least one element selected from Fe, Co and Ni.

7. The cathode active material for a lithium secondary battery according to any one of claims 1 to 6, wherein the second lithium metal phosphate particles are represented by Chemical Formula 2:
[Chemical Formula 2] Li_{b}Mn_{c}Fe_{d}PₑO_{4+f}
wherein, in Chemical Formula 2, 0.9≤b≤1.2, 0.4≤c≤0.8, 0.2≤d≤0.6, 0.9≤e≤1.2, and -0.1≤f≤0.1.

8. The cathode active material for a lithium secondary battery according to any one of claims 1 to 7, wherein the first lithium metal phosphate particles or the second lithium metal phosphate particles further includes a doping element or a coating element, and
the doping element or the coating element includes at least one element selected from Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

9. The cathode active material for a lithium secondary battery according to any one of claims 1 to 8, wherein the first lithium metal phosphate particles or the second lithium metal phosphate particles includes a carbon coating formed on a surface portion thereof.

10. The cathode active material for a lithium secondary battery according to claim 9, wherein a content of the carbon coating based on a total weight of the first lithium metal phosphate particles is in a range from 0.5 wt% to 3.0 wt%, or a content of the carbon coating based on the total weight of the second lithium metal phosphate particles is in a range from 0.5 wt% to 3.0 wt%.

11. The cathode active material for a lithium secondary battery according to any one of claims 1 to 10, further comprising third lithium metal phosphate particles including iron and manganese and having a single particle shape.

12. The cathode active material for a lithium secondary battery according to claim 11, wherein a ratio of a weight of the third lithium metal phosphate particles relative to a total weight of the second lithium metal phosphate particles and the third lithium metal phosphate particles is in a range from 0.01 to 0.5.

13. A lithium secondary battery, comprising:
a cathode including the cathode active material for a lithium secondary battery of any one of claims 1 to 12; and
an anode facing the cathode.
